# EUROPÄISCHE PATENTSCHRIFT

(11) **EP 3 474 409 B1**
(45) Veröffentlichungstag und Bekanntmachung des Hinweises auf die Patenterteilung: **07.09.2022**
(21) Anmeldenummer: 18181915.2
(22) Anmeldetag: 05.07.2018
(51) Int. Cl.: H02J 3/00

(54) **MESSUNG EINER ELEKTRISCHEN GRÖSSE AN EINEM VERBRAUCHER IN EINEM WECHSELSTROMNETZ**
MEASURING AN ELECTRICAL QUANTITY FOR A CONSUMER IN AN ALTERNATING CURRENT NETWORK
MESURE D'UNE GRANDEUR ÉLECTRIQUE SUR UN CONSOMMATEUR DANS UN RÉSEAU DE COURANT ALTERNATIF

(30) Priorität: 18.10.2017 DE 102017124288
(43) Veröffentlichungstag der Anmeldung: 24.04.2019
(73) Patentinhaber: Innogy SE, 45128 Essen (DE)
(72) Erfinder: Konzen, Willi, 45359 Essen (DE); Nikodem, Dr. Torsten, 58453 Witten (DE); Radtke, Gerhard, 44869 Bochum (DE); Schmidt, Eugen, 46487 Wesel (DE)
(74) Vertreter: Cohausz & Florack

(56) Entgegenhaltungen:
- DE-A1-102015 000 076

## Beschreibung

Der Gegenstand betrifft ein Verfahren sowie eine Vorrichtung zum Erfassen einer elektrischen Größe eines an ein Wechselstromnetz angeschlossenen Verbrauchers.

Es gibt eine Vielzahl von Produkten auf dem Markt, mit deren Hilfe sich der Stromfluss und damit auch indirekt die Leistung der angesprochenen Verbraucher messen lassen. Bei solchen berührungslosen Messgeräten, die insbesondere mit einer Stromzange arbeiten, wird jedoch von einer stabilen Netzspannung von 230V sowie einer nur sehr geringen Phasendifferenz zwischen Strom und Spannung ausgegangen. Die aus dem gemessenen Strom und der angenommenen Netzspannung ermittelte Scheinleistung wird als Wirkleistung angegeben. Mit wachsender Phasendifferenz wird jedoch der Messfehler größer. Außerdem gibt es Spannungsschwankungen im Netz, die zu einer weiteren Verwässerung des angezeigten Messergebnisses führen. Mit steigender Phasendifferenz wächst der Anteil der Blindleistung an der gemessenen Scheinleistung, und die Anzeige der Scheinleistung kann nicht mehr als Wirkleistung angenommen werden.

Durch den zunehmenden Ausbau von lokalen Einspeisern, insbesondere sogenannten erneuerbaren Energiequellen, wie beispielsweise PV-Anlagen, Windkraftanlagen, Biogasanlagen, KWK-Anlagen oder dergleichen, kommt es immer häufiger vor, dass sowohl die Netzspannung schwankt, als auch dass die Phasendifferenz zwischen Strom und Spannung anwächst. In diesen Fällen, in denen also die von den Messgeräten vorgenommenen Annahmen nicht mehr stimmen, ist auch die berechnete Scheinleistung um einen erheblichen Betrag abweichend von der tatsächlichen Wirkleistung.

Die durch herkömmliche Messgeräte gemessene Leistung weicht umso mehr von der tatsächlichen Wirkleistung ab, je größer die Phasendifferenz als auch die Spannungsschwankung ist.

Gerade bei mehrphasigen Verbrauchern kann auf jeder einzelnen Phase eine unterschiedliche Spannung anliegen, als auch eine unterschiedliche Phasendifferenz. Dies führt zu einem weiteren Messfehler, so dass herkömmliche Messgeräte nur noch unzureichend einsetzbar sind. Dokument DE102015000076A1 zeigt ein Verfahren zum Erfassen einer elektrischen Größe, bei dem gemessene Phasenwinkel von Strom und Spannung zum Einsatz kommen.

Dem Gegenstand lag somit die Aufgabe zugrunde, eine optimierte Messung einer elektrischen Größe eines Wechselstromnetzes zu ermöglichen. Diese Messung soll unter geringem Eingriff in die Verkabelung des Verbrauchers möglich sein.

Zur Lösung dieser Aufgabe wird ein Verfahren nach Anspruch 1 sowie eine Messvorrichtung nach Anspruch 9 vorgeschlagen.

Es ist erkannt worden, dass die Messeinrichtung selbst bereits an einer Phase des Wechselstromnetzes angeschlossen und hierüber elektrisch versorgt ist. Somit ist es möglich, an dieser einen Phase des Wechselstromnetzes die tatsächliche Spannung als auch den tatsächlichen Phasenwinkel der Versorgungsspannung zu messen. Durch die galvanische Kopplung der Messeinrichtung mit der einen Phase des Versorgungsnetzes wird die Messeinrichtung einerseits mit Versorgungsspannung versorgt und andererseits kann ohne einen weiteren Eingriff in das Wechselstromnetz bzw. die Leitung des Wechselstromnetzes sowie die Leitung zum Verbraucher unmittelbar der Phasenwinkel der Versorgungsspannung gemessen werden. Auch kann zusätzlich der Betrag der Versorgungsspannung gemessen werden.

Um nun eine Aussage zu der tatsächlichen von einem Verbrauch bezogenen Wirkleistung treffen zu können, ist die Kenntnis der Phasendifferenz zwischen Strom und Spannung an den mit dem Verbraucher verbundenen Phasen notwendig. Es ist erkannt worden, dass durch eine Messung des Phasenwinkels des Stroms in den jeweiligen Phasen der an dem Verbrauch angeschlossenen Leitungen des Wechselstromnetzes eine Herleitung der Phasendifferenz zwischen Strom und Spannungen an allen Phasen möglich ist. In Kenntnis einerseits des Phasenwinkels der Phase der Versorgungsspannung mit dem die Messeinrichtung elektrisch versorgt wird und andererseits der Phasenwinkel der Ströme in den Phasen der Versorgungsleitung(en) des Verbrauchers lässt sich eine Auswertung durchführen, die zur Bestimmung einer elektrischen Größe, beispielweise Wirkleistung, Scheinleitung und/oder Blindleistung genutzt werden kann. Hierbei machen sich die Erfinder die Erkenntnis zu Nutze, dass selbst bei einer größeren Phasendifferenz zwischen jeweils Strom und Spannung an einer Phase deren Phasenwinkel jedoch weiterhin eng beieinander liegen und eine Phasendifferenz von mehr als 60° an einer Phase höchst unwahrscheinlich ist.

Durch diese Erkenntnis lassen sich die gemessenen Phasenwinkel des Stromes den jeweiligen Phasenwinkel der Versorgungsspannung zuordnen. Eine weitere Erkenntnis, welche die Erfinder nutzbar machen liegt darin, dass die Phasenwinkel der Spannung der einzelnen Phasen zueinander als nahezu konstant angenommen werden können, insbesondere kann angenommen werden, dass die Phasendifferenz der Phasenwinkel der Spannungen jeweils 120° beträgt.

Um eine Zuordnung zwischen den Phasenwinkeln der Ströme in den jeweiligen Phasen der an den Verbrauchern angeschlossenen Leitungen des Wechselstromnetzes zu dem Phasenwinkel der Versorgungsspannung zu ermöglichen, wird vorgeschlagen, dass eine Phasendifferenz zwischen einem jeweiligen gemessenen Phasenwinkel des Stroms zu dem gemessen Phasenwinkel der Versorgungsspannung ermittelt wird.

Für die Messung wird zunächst, z.B. bei einem Power-On-Reset, der Phasenwinkel der Versorgungsspannung als auch die Phasenwinkel der Ströme in den Leitungen zu dem Verbraucher gemessen. Es ist auch möglich, dass die Messeinrichtung ein synchrones Zeitsignal aufweist, mit welchem der Phasenwinkel der Versorgungsspannung und die Phasenwinkel der Ströme in den jeweiligen Phasen der Leitung gemessen werden.

Hierdurch wird sichergestellt, dass die Winkelinformation zeitgleich erfasst wird und eine Phasendifferenz nicht aufgrund einer zeitlich unterschiedlichen Messung gemessen wird.

Durch die Messanschlüsse liegen die Phasenwinkel des Stroms in den jeweiligen Phasen an der Messeinrichtung an. Für jeden der gemessenen Phasenwinkel des Stroms wird eine Phasendifferenz zu dem Phasenwinkel der Versorgungsspannung berechnet. Somit liegen zwei oder mehr, insbesondere drei berechnete Phasendifferenzen vor. Durch die Messanschlüsse liegen darüber hinaus auch Informationen zum Betrag des jeweiligen Stroms auf einer Phase an. Unter Verwendung der Phasendifferenz von Strom und Spannung auf einer Phase und den jeweiligen Beträgen von Strom und Spannung lässt sich somit die Wirkleistung und/oder Blindleistung bestimmen.

Es wird vorgeschlagen, dass die ermittelten Phasendifferenzen derart genutzt werden, dass genau einer der gemessenen Phasenwinkel des Stroms dem gemessenen Phasenwinkel der Versorgungsspannung zugeordnet wird.

Es wird vorgeschlagen, dass derjenige Phasenwinkel des gemessenen Stroms dem gemessenen Phasenwinkel der Versorgungsspannung zugeordnet wird, bei dem die ermittelte Phasendifferenz oder der Betrag der ermittelten Phasendifferenz minimal ist. Die zwei bzw. drei ermittelten Phasendifferenzen werden so ausgewertet, dass die minimale Phasendifferenz als diejenige bewertet wird, welche von dem Phasenwinkel des Stroms stammt, der dem Phasenwinkel der Versorgungsspannung zugeordnet werden kann. Dem liegt die Erkenntnis zugrunde, dass in der Regel die Phasenwinkel von Strom und Spannung auf einer Phase gleichlaufend sind und in der Regel Strom und Spannung einer einzelnen Phase eine kleinere Phasendifferenz gegenüber der Phasendifferenz zwischen Strom und Spannung zweier unterschiedlicher Phasen aufweist.

In Kenntnis des Phasenwinkels der Versorgungsspannung kann gemäß einem Ausführungsbeispiel eine Annahme der Phasenwinkel der Spannungen der jeweils anderen Phasen des Versorgungsnetzes angenommen werden. Die Messeinrichtung ist mit einer Phase eines mehrphasigen Versorgungsnetzes verbunden. Insbesondere bei einem dreiphasigen Versorgungsnetz sind zwei weitere Phasenwinkel der Spannung zunächst unbekannt. Es wird jedoch vorgeschlagen, dass ein solcher Phasenwinkel der Spannung berechnet wird und den beiden Phasen des Versorgungsnetzes zugeordnet wird. Insbesondere kann die Annahme gelten, dass die Phasenwinkel der Spannungen auf den drei Phasen um jeweils 120° voneinander abweichen. Aus diesem Grunde wird vorgeschlagen, dass eine Phasendifferenz der berechneten Phasenwinkel der Spannung von 120° zu dem gemessenen Phasenwinkel der Versorgungsspannung bestimmt wird. Ausgehend von dem gemessenen Phasenwinkel der Versorgungsspannung wird der Phasenwinkel der beiden anderen Spannungen auf den anderen Phasen mit +/-120° hierzu angenommen.

Nachdem die Phasenwinkel der Spannungen der einzelnen Phasen berechnet wurden, kann eine Phasendifferenz zwischen diesen berechneten Phasenwinkeln und den gemessenen Phasenwinkeln des Stroms gemäß einem Ausführungsbeispiel bestimmt werden.

Um festzustellen, welcher Phasenwinkel des Stroms zu welchen Phasenwinkel der Spannung zugeordnet werden kann, wird gemäß einem Ausführungsbeispiel vorgeschlagen, dass eine minimale Phasendifferenz zwischen den berechneten Phasenwinkeln der Spannung und den gemessenen Phasenwinkeln des Stroms bestimmt wird. Bei dieser Bestimmung wird der Phasenwinkel des Stroms, welcher zuvor bereits dem Phasenwinkel der Versorgungsspannung zugeordnet wurde, bevorzugt nicht berücksichtigt.

Vorzugsweise werden zwei Phasenwinkel der Spannung auf den nicht gemessenen Phasen berechnet und diese werden verglichen mit den gemessenen Phasenwinkeln des Stroms auf den Phasen der Leitung des Verbrauchers. Die Annahme, dass die Phasenwinkel von Strom und Spannung auf einer Phase nur gering voneinander abweichen führt zu der Erkenntnis, dass die minimale Phasendifferenz zwischen den berechneten Phasenwinkeln der Spannung und den gemessenen Phasenwinkel des Stroms bestimmt wird und anschließend derjenige Phasenwinkel des Stroms der Phase zugeordnet wird, bei dem sich die minimale Phasendifferenz eingestellt hat. Aus diesem Grunde wird vorgeschlagen, dass der Phasenwinkel des Stroms mit der bestimmten minimalen Phasendifferenz der Phase zugeordnet wird, welche den entsprechenden berechneten Phasenwinkel der Spannung aufweist.

Gemäß einem Ausführungsbeispiel wird vorgeschlagen, dass jeder Phase der Leitung zu dem Verbraucher genau ein gemessener Phasenwinkel des Stroms und ein Phasenwinkel der Spannung zugeordnet wird. Hierbei wird vorgeschlagen, dass einer der Phasen der gemessene Phasenwinkel der Versorgungsspannung und einer der gemessenen Phasenwinkel des Stroms zugeordnet wird und den verbleibenden Phasen jeweils einer der berechneten Phasenwinkel der Spannung und einer der gemessenen Phasen des Stroms zugeordnet wird. Hierbei erfolgt die Zuordnung vorzugsweise derart, dass die Phasendifferenzen zwischen Strom und Spannung auf einer jeweiligen Phase minimal ist.

Anschließend wird gemäß einem Ausführungsbeispiel eine Wirkleistung bestimmt. Es versteht sich, dass die so bestimmte Wirkleistung nicht der tatsächlichen Wirkleistung entspricht, sondern ein Annäherungswert an die tatsächliche Wirkleistung ist. Es versteht sich jedoch auch, dass diese angenäherte Wirkleistung erheblich genauer ist, als derjenige, welcher mit den herkömmlichen Messeinrichtungen bestimmt wird. Es wird auch vorgeschlagen, dass die Wirkleistung an einer jeweiligen Phase unter Berücksichtigung der jeweils bestimmten Phasendifferenz bestimmt wird.

Ferner kann auch angenommen werden, dass die Spannungsbeträge an den Phasen, welche nicht an dem Versorgungsanschluss anliegen, dem Betrag der Versorgungsspannung entsprechen. Somit kann der Betrag der Spannung an den Phasen entsprechend dem Betrag der Versorgungsspannung angenommen werden.

Gemäß einem Ausführungsbeispiel wird vorgeschlagen, dass die Phasenwinkel der Ströme berührungslos erfasst werden. Dabei ist es möglich, beispielsweise mittels einer Stromzange die Phasenwinkel der Ströme an den einzelnen Phasen zu erfassen. Der Nutzer kann beispielsweise Stromzangen oder Stromklemmen an den Zuleitungen zu dem Verbraucher anschließen.

Der Verbraucher ist vorzugsweise ein mehrphasiger Verbraucher und an jeweils einer Zuleitung einer Phase kann eine solche Stromzange angeordnet werden. Anschließend wird die Stromzange mit den Messanschlüssen verbunden. Auch können die Messanschlüsse unmittelbar mit der Stromzange verbunden sein.

Wie bereits erläutert, ist das Wechselstromnetz ein Dreiphasennetz gemäß einem Ausführungsbeispiel.

Nachfolgend wird der Gegenstand anhand einer Ausführungsbeispiele zeigenden Zeichnung näher erläutert. In der Zeichnung zeigen:
- Fig. 1: eine schematische Ansicht eines gegenständlichen Messeeinrichtung;
- Fig. 2a-e: den Ablauf des gegenständlichen Verfahrens anhand beispielhafter Zeigerdiagramme.

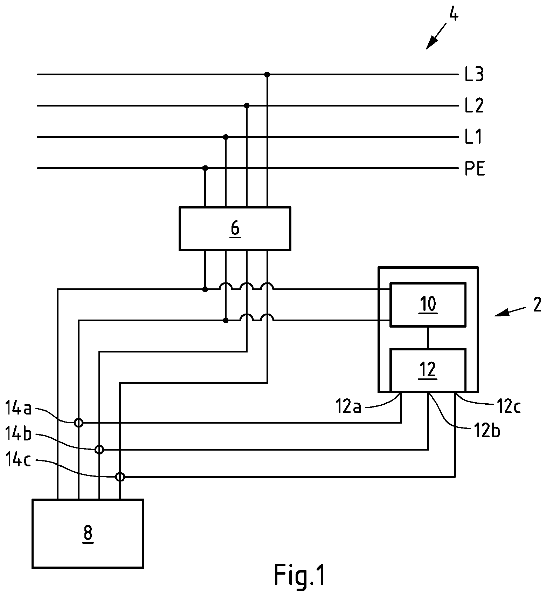

Fig. 1 zeigt eine Messvorrichtung 2 an einem Wechselstromnetz 4. Das Wechselstromnetz 4 hat insbesondere drei Phasen L1, L2, L3 sowie einen Nullleiter PE. Über einen Hausanschluss 6 können Verbraucher 8 mit den Phasen L1-3 und dem Nullleiter PE verbunden werden. An dem Hausanschluss 6 sind beispielsweise Sammelschienen angeordnet und über jeweils eine solche Sammelschiene ist die Messvorrichtung 2 mit dem Nullleiter PE und der Phase L1 verbunden. So ist die Versorgungsspannung für die Messvorrichtung 2 sichergestellt. An diese Versorgungsspannung ist die Messeinrichtung 10 angeschlossen.

Ferner ist die Messeinrichtung 10 mit den Messanschlüssen 12a, b, c der Messvorrichtung 2 verbunden. An den Messanschlüssen 12a-c sind Stromzangen 14a-c angeschlossen. Die Stromzangen 14a-c können den Betrag des Stromes und den Phasenwinkel des Stromes erfassen. Die Stromzange 14a wird beispielsweise an die Phase L1 angelegt, die Stromzange 14b an die Phase L2 und die Stromzange 14c an die Phase L3. Über die Messanschlüsse 12a-c können sowohl Informationen zu den gemessenen Phasenwinkeln als auch Informationen zu dem Betrag des Stromes der Messeinrichtung 10 mitgeteilt werden. In der Messeinrichtung 10 kann der Betrag der Spannung an der Phase L1 sowie der Phasenwinkel der Spannung an der Phase L1 bestimmt werden.

In der Fig. 1 ist gezeigt, dass der Verbraucher dreiphasig angeschlossen ist. Die Stromzange 14a-c können berührungslos an den Leitungen, die die Phasen L1-3 führen, angeschlossen werden.

Zeitsynchron, insbesondere nach ein Power-On-Reset, erfolgt sowohl eine Erfassung des Phasenwinkels der Versorgungsspannung an der Phase L1 durch die Messeinrichtung 10 als auch der Phasenwinkel der Ströme an den Phasen L1-3 durch die Stromzangen 14a-c. Zusätzlich kann auch ein Betrag der Ströme an den Phasen L1-3 durch die Stromzangen 14a-c erfasst werden. Mit Hilfe dieser Informationen als auch einer Information zu dem Betrag der Spannung lässt sich eine Wirkleistung des Verbrauchers 8 je Phase bestimmen.

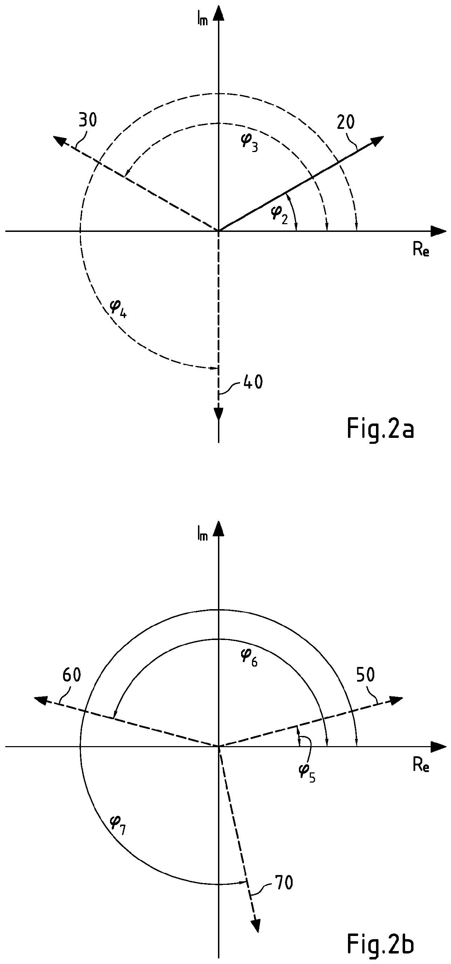

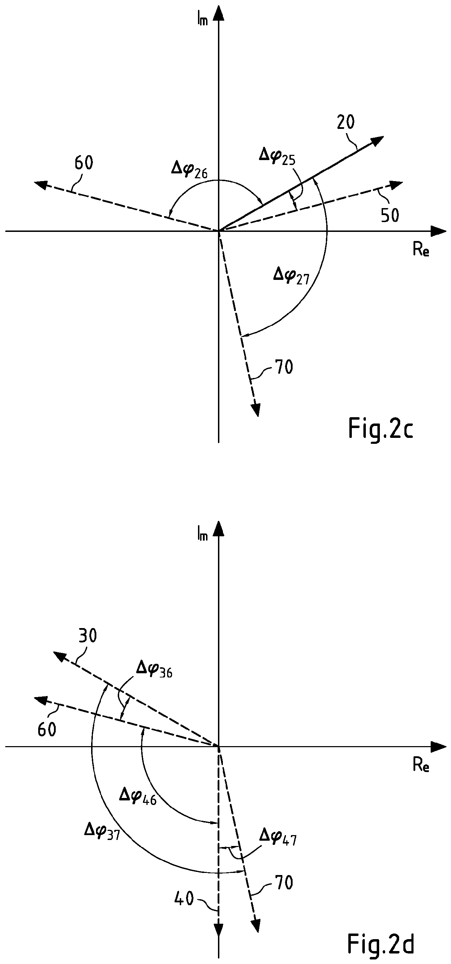

Fig. 2a zeigt ein beispielhaftes Zeigerdiagramm der Spannungen an den Phasen L1-3. Die Darstellung von Wechselstrom anhand eines Zeigerdiagramms ist hinlänglich bekannt und zeigt den Real- und Imaginäranteil an den jeweiligen Achsen. Eine nähere Erläuterung hierfür ist nicht notwendig, da ein solches Zeigerdiagramm dem Fachmann geläufig ist.

Fig. 2a zeigt, dass beispielsweise in der Messeinrichtung 10 die Information für die Versorgungsspannung gemessen werden kann, welche mit dem Zeiger 20 dargestellt wird. Der Betrag der Versorgungsspannung wird über die Länge des Zeigers 20 dargestellt und der momentane Phasenwinkel zum Messzeitpunkt ist der Winkel ϕ₂.

Ausgehend von der Information zu dem Phasenwinkel ϕ₂ können die Phasenwinkel ϕ₃ und ϕ₄ bestimmt werden, welche den Spannungen 30 und 40 zugeordnet werden können. Diese berechneten Phasenwinkel ϕ₃, ϕ₄ können so bestimmt werden, dass die Zeiger 30, 40 jeweils einen Winkelabstand von 120° zu dem Zeiger 20 haben bzw. ϕ₃= ϕ₂+120°, ϕ₄= ϕ₂+240°. Der Zeiger 20 kann beispielsweise die Spannung an der Phase L1 repräsentieren, der Zeiger 30 die Spannung an der Phase 2 und der Zeiger 40 die Spannung an der Phase L3.

In der Messeinrichtung wird lediglich die Information zu dem Phasenwinkel ϕ2 der Versorgungsspannung als auch der Betrag der Versorgungsspannung gemessen, welche durch den Zeiger 20 repräsentiert sind. Die Beträge der Spannungen an den anderen Phasen werden durch die Zeiger 30 und 40 repräsentiert.

Fig. 2b zeigt ein Zeigerdiagramm, mit welchem die Phaseninformationen der Ströme repräsentiert werden können. Diese Informationen können beispielsweise durch die Messzangen 14a-c bestimmt werden.

Zunächst ist über die Messanschlüsse 12a-c eine Information empfangbar zu einem jeweiligen Phasenwinkel ϕ5, ϕ6, ϕ7. Darüber hinaus kann eine Information zu einem Betrag des jeweiligen Stromes empfangen sein und ein jeweiliger Strom kann durch einen Zeiger 50, 60, 70 repräsentiert sein. Somit kann das Zeigerdiagramm gemäß der Fig. 2b die Ströme durch die Zeiger 50, 60, 70 denen die Phasenwinkel ϕ5, ϕ6, ϕ7 zugeordnet sind, bestimmt werden. Auch hier zeigt das Zeigerdiagramm natürlich nur einen momentanen Wert zum Messzeitpunkt.

In der Messeinrichtung 10 liegen somit die Informationen zu den Zeigern 20, 50, 60 und 70 , also deren Beträge sowie die Phasenwinkel ϕ₂,ϕ₅,ϕ₆,ϕ₇ und die berechneten Phasenwinkel ϕ₃ und ϕ₄ vor.

In der Messeinrichtung 10 ist nicht bekannt, welche Phase der Versorgungsspannung zu welcher Phase der gemessenen Ströme gehört. Für eine solche Zuordnung erfolgt zunächst eine Bestimmung der Phasendifferenz.

Dazu kann, wie in der Fig. 2c gezeigt, die Phasendifferenz zwischen dem Zeiger 20 und den jeweiligen Zeigern 50, 60, 70 bestimmt werden. Hierbei ist es beispielsweise möglich, die Phasendifferenz Δϕ₂₅ zu berechnen, welche sich aus der Differenz der Winkel Δϕ₂₅ = ϕ₂ - ϕ₅ ergibt. Auch kann die Phasendifferenz Δϕ₂₆, welche sich aus der Differenz der Winkel Δϕ₂₆=ϕ₂ - ϕ₆ ergibt, berechnet werden. Auch kann die Phasendifferenz Δϕ₂₇ berechnet werden, welche sich aus der Differenz der Winkel Δϕ₂₇=ϕ₂ - ϕ₇ ergibt.

Anschließend wird der minimale Wert der drei Werte Min {Δϕ₂₅, Δϕ₂₆, Δϕ₂₇} bestimmt. Dies ist vorliegend die Phasendifferenz Δϕ₂₅. Dadurch, dass Δϕ₂₅ aus der Differenz aus den Winkeln ϕ₂ und ϕ₅ bestimmt wurde, ist bekannt, dass der Zeiger 50 dem Zeiger 20 zugeordnet werden kann. Das bedeutet, dass die durch den Zeiger 50 repräsentierte Phase des Stroms dem Zeiger 20, welcher die Versorgungsspannung repräsentiert, zugeordnet wird. Somit ist bereits ein Strom in der Versorgungsleitung der Versorgungsspannung zugeordnet und die Zeiger 20, 50 repräsentieren Strom und Spannung an der Phase L1.

Anschließend erfolgt eine Berechnung der Phasenwinkel ϕ₃ und ϕ₄, wie in der Fig. 2a gezeigt. Dies kann derart erfolgen, dass ϕ₃ = ϕ₂ + 120° und ϕ₄ = ϕ₂ - 120° = ϕ₂ + 240° ist. Nunmehr können die Phasendifferenzen Δϕ₃₆, Δϕ₃₇, Δϕ₄₆, Δϕ₄₇ berechnet werden. Die Phasendifferenz Δϕ₃₆ ergibt sich aus der Differenz der Phasenwinkel Δϕ₃₆ = ϕ₃-ϕ₆. Die Phasendifferenz Δϕ₃₇ ergibt sich aus der Differenz der Phasenwinkel Δϕ₃₆=ϕ₃-ϕ₇. Dies sind die beiden Phasendifferenzen, die der Zeiger 30 zu den Zeigern 60 und 70 hat. Aus diesen beiden Werten kann das Minimum Min {Δϕ₃₆, Δϕ₃₇} bestimmt werden, welches vorliegend die Phasendifferenz Δϕ₃₆ ist und der Zeiger 30 kann dem Zeiger 60 zugeordnet werden.

Auch kann die Phasendifferenz Δϕ₄₆ aus der Differenz der Phasenwinkel Δϕ₄₆ = ϕ₄-ϕ₆ bestimmt werden. Ferner kann die Phasendifferenz Δϕ₄₇ aus der Differenz der Phasenwinkel Δϕ₄₇ = ϕ₄ - ϕ₇ bestimmt werden. Auch hier kann ein minimaler Wert Min {Δϕ₄₆, Δϕ₄₇} bestimmt werden, welches die Phasendifferenz Δϕ₄₇ ist. Anhand dieser Bestimmung ist es möglich, den Zeiger 40 dem Zeiger 70 zuzuweisen.

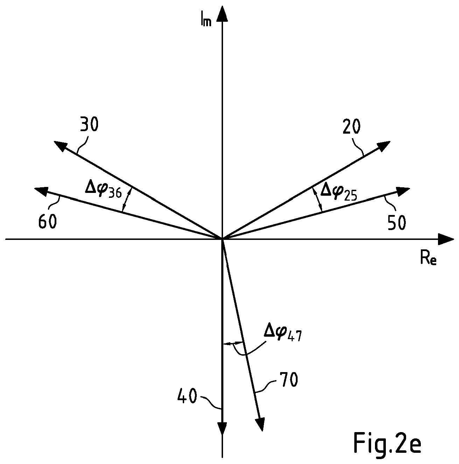

Somit ist jede Phaseninformation der Ströme einer jeweiligen Phaseninformation der Spannungen zugeordnet, wie in der Fig. 2e gezeigt. Dort ist gezeigt, dass der Zeiger 20 dem Zeiger 50 zugeordnet ist, der Zeiger 30 dem Zeiger 60 und der Zeiger 40 dem Zeiger 70. Die Phasendifferenzen Δϕ₂₅, Δϕ₃₆ und Δϕ₄₇ wurden jeweils so bestimmt, dass die Zeiger möglichst eng beieinanderliegen. Die Informationen zu dem Betrag der Spannung und der Ströme zusammen mit der Information zu der jeweiligen Phasendifferenz ermöglicht es nunmehr, für jede einzelne Phase eine Wirkleistung zu bestimmen, die möglichst nah bei der tatsächlichen Wirkleistung ist.

### Bezugszeichenliste

2 Messvorrichtung
4 Wechselspannungsnetz
L1-3 Phasen
PE Nullleiter
6 Hausanschluss
8 Verbraucher
10 Messeinrichtung
12a-c Messanschlüsse
14a-c Stromzange
20, 30, 40 Zeiger repräsentierend eine Spannung
ϕ₂, ϕ₃, ϕ₄ Phasenwinkel von Spannungen
50, 60,70 Zeiger repräsentierend Ströme
ϕ₅, ϕ₆, ϕ₇ Phasenwinkel der Ströme
Δϕ Phasendifferenzen

## Patentansprüche

1. Verfahren zum Zuordnen eines Versorgungsspannungs-Phasenwinkels, der in einer Leitung eines Dreiphasen-Wechselstromnetzes gemessen wurde, zu einem von mehreren Strom-Phasenwinkeln, die in entsprechenden Leitungen des Dreiphasen-Wechselstromnetzes gemessen wurden, wobei die Messung der Phasenwinkel mittels einer entsprechenden Messeinrichtung an Leitungen des Versorgungsanschlusses erfolgt, über die ein Verbraucher an das Dreiphasen-Wechselstromnetz angeschlossen ist, wobei
- eine Messeinrichtung (2) über eine Leitung des Versorgungsanschlusses an eine Leitung des Wechselstromnetzes (4) angeschlossenen ist und über diese elektrisch versorgt ist, wobei mit Hilfe der Messeinrichtung (2) an der Leitung (6) zur elektrischen Versorgung der Messeinrichtung ein Phasenwinkel (ϕ2, ϕ3, ϕ4) der Versorgungsspannung gemessen wird,
- an jeweiligen Messanschlüssen der Messeinrichtung (2) jeweils ein Phasenwinkel (ϕ5, ϕ6, ϕ7) des Stroms in den Leitungen des Wechselstromnetzes (4) gemessen wird und
- die jeweilig gemessenen Phasenwinkel (ϕ5, ϕ6, ϕ7) des Stroms mit dem gemessenen Phasenwinkel (ϕ2, ϕ3, ϕ4) der Versorgungsspannung ausgewertet werden,
**dadurch gekennzeichnet,**
- **dass** eine Phasendifferenz (Δϕ) zwischen einem jeweilig gemessenen Phasenwinkel (ϕ5, ϕ6, ϕ7) des Stroms und dem gemessenen Phasenwinkel (ϕ2, ϕ3, ϕ4) der Versorgungsspannung ermittelt wird,
- **dass** abhängig von der jeweils ermittelten Phasendifferenz (Δϕ) genau einer der gemessenen Phasenwinkel (ϕ5, ϕ6, ϕ7) des Stroms dem gemessenen Phasenwinkel (ϕ2, ϕ3, ϕ4) der Versorgungsspannung zugeordnet wird, wobei
- derjenige Phasenwinkel (ϕ5, ϕ6, ϕ7) des gemessenen Stroms dem gemessenen Phasenwinkel (ϕ2, ϕ3, ϕ4) der Versorgungsspannung zugeordnet wird, bei dem die ermittelte Phasendifferenz (Δϕ) oder der Betrag der ermittelten Phasendifferenz (Δϕ) minimal ist.

2. Verfahren nach Anspruch 1,
**dadurch gekennzeichnet,**
- **dass** ausgehend von dem gemessenen Phasenwinkel (ϕ2, ϕ3, ϕ4) der Versorgungsspannung den beiden anderen Leitungen des Versorgungsnetzes (4) ein berechneter Phasenwinkel der Spannung zugeordnet wird, insbesondere dass eine Phasenverschiebung der berechneten Phasenwinkeln von jeweils 120° zu dem gemessenen Phasenwinkel der Versorgungsspannung bestimmt wird.

3. Verfahren nach einem der vorangehenden Ansprüche,
**dadurch gekennzeichnet,**
- **dass** jeweils eine Phasendifferenz (Δϕ) zwischen den berechneten Phasenwinkeln (ϕ2, ϕ3, ϕ4) der Spannung und zumindest einem der gemessenen Phasenwinkel (ϕ5, ϕ6, ϕ7) des Stroms bestimmt wird.

4. Verfahren nach einem der vorangehenden Ansprüche,
**dadurch gekennzeichnet,**
- **dass** eine minimale Phasendifferenz (Δϕ) zwischen den berechneten Phasenwinkeln (ϕ2, ϕ3, ϕ4) der Spannung und den gemessenen Phasenwinkeln (ϕ5, ϕ6, ϕ7) des Stroms, welche nicht dem Phasenwinkel (ϕ2, ϕ3, ϕ4) der Versorgungsspannung zugeordnet sind, bestimmt wird.

5. Verfahren nach einem der vorangehenden Ansprüche,
**dadurch gekennzeichnet,**
- **dass** der Phasenwinkel (ϕ5, ϕ6, ϕ7) des Stroms mit der bestimmten minimalen Phasendifferenz (Δϕ) der Leitung zugeordnet wird, welche den entsprechenden berechneten Phasenwinkel (ϕ2, ϕ3, ϕ4) der Spannung aufweist.

6. Verfahren nach einem der vorangehenden Ansprüche,
**dadurch gekennzeichnet,**
- **dass** jeder Leitung genau ein gemessener Phasenwinkel (ϕ5, ϕ6, ϕ7) des Stroms und ein Phasenwinkel (ϕ2, ϕ3, ϕ4) der Spannung zugeordnet werden, wobei einer Leitung der gemessenen Phasenwinkel (ϕ2, ϕ3, ϕ4) der Spannung und einer der gemessenen Phasenwinkel (ϕ5, ϕ6, ϕ7) des Stroms zugeordnet werden und den verbleibenden Leitungen jeweils einer der berechneten Phasenwinkel (ϕ2, ϕ3, ϕ4) der Spannung und einer der gemessenen Phasenwinkel (ϕ5, ϕ6, ϕ7) des Stroms zugeordnet werden.

7. Verfahren nach einem der vorangehenden Ansprüche,
**dadurch gekennzeichnet,**
- **dass** die Wirkleistung an einer jeweiligen Leitung unter Berücksichtigung der jeweils bestimmten Phasendifferenz (Δϕ) bestimmt wird.

8. Verfahren nach einem der vorangehenden Ansprüche,
**dadurch gekennzeichnet,**
- **dass** die Phasenwinkel (ϕ5, ϕ6, ϕ7) der Ströme berührungslos erfasst werden, insbesondere mittels einer Stromzange (14a-c).

9. Messvorrichtung (2) eingerichtet zum Messen von Phasenwinkeln, die in den Leitungen eines Dreiphasen-Wechselstromnetzes auftreten, und zum Zuordnen eines Versorgungsspannungs-Phasenwinkels, der in einer Leitung des Dreiphasen-Wechselstromnetzes gemessen wurde, zu einem von mehreren Strom-Phasenwinkeln, die in entsprechenden Leitungen des Dreiphasen-Wechselstromnetzes gemessen wurde, wobei die Messvorrichtung eingerichtet, ist, die Messung der Phasenwinkel an Leitungen des Versorgungsanschlusses vorzunehmen, über die ein Verbraucher an dem Dreiphasen-Wechselstromnetz angeschlossen ist, mit:
- einem Anschluss an eine Leitung des Versorgungsanschlusses, über den die Messvorrichtung an eine der Leitungen des Wechselstromnetzes zur elektrischen Versorgung der Messvorrichtung angeschlossen ist,
- einer Messeinrichtung eingerichtet zum Messen des Phasenwinkels der Spannung an der Leitung, die zur elektrischen Versorgung der Messvorrichtung dient,
- einer Messeinrichtung mit zumindest drei Messanschlüssen eingerichtet zum Messen der jeweiligen Phasenwinkel des Stroms in den Leitungen des Wechselstromnetzes und zum Bewerten der jeweiligen Phasenwinkel des Stroms mit dem Phasenwinkel der Versorgungsspannung
**dadurch gekennzeichnet,**
- **dass** die Messvorrichtung eingerichtet ist, eine Phasendifferenz (Δϕ) zwischen einem jeweilig gemessenen Phasenwinkel (ϕ5, ϕ6, ϕ7) des Stroms und dem gemessenen Phasenwinkel (ϕ2, ϕ3, ϕ4) der Versorgungsspannung zu ermitteln,
- **dass** die Messvorrichtung eingerichtet ist, abhängig von der jeweils ermittelten Phasendifferenz (Δϕ) genau einer der gemessenen Phasenwinkel (ϕ5, ϕ6, ϕ7) des Stroms dem gemessenen Phasenwinkel (ϕ2, ϕ3, ϕ4) der Versorgungsspannung zuzuordnen, wobei
- derjenige Phasenwinkel (ϕ5, ϕ6, ϕ7) des gemessenen Stroms dem gemessenen Phasenwinkel (ϕ2, ϕ3, ϕ4) der Versorgungsspannung zugeordnet wird, bei dem die ermittelte Phasendifferenz (Δϕ) oder der Betrag der ermittelten Phasendifferenz (Δϕ) minimal ist.

## Claims

1. Method for assigning a supply voltage phase angle measured in a line of a three-phase alternating current network to one of several current phase angles measured in corresponding lines of the three-phase alternating current network, wherein the measurement of the phase angles is carried out by means of a corresponding measuring device on lines of the supply connection via which a consumer is connected to the three-phase alternating current network, wherein
- a measuring device (2) is connected via a line of the supply connection to a line of the alternating current network (4) and is electrically supplied via the latter, a phase angle (ϕ2, ϕ3, ϕ4) of the supply voltage being measured with the aid of the measuring device (2) on the line (6) for the electrical supply of the measuring device,
- a phase angle (ϕ5, ϕ6, ϕ7) of the current in the lines of the alternating current network (4) is measured at respective measuring terminals of the measuring device (2), and
- the respective measured phase angles (ϕ5, ϕ6, ϕ7) of the current are evaluated with the measured phase angle (ϕ2, ϕ3, ϕ4) of the supply voltage,
**characterized in that**
- a phase difference (Δϕ) between a respectively measured phase angle (ϕ5, ϕ6, ϕ7) of the current and the measured phase angle (ϕ2, ϕ3, ϕ4) of the supply voltage is determined,
- depending on the determined phase difference (Δϕ) respectively exactly one of the measured phase angles (ϕ5, ϕ6, ϕ7) of the current is assigned to the measured phase angle (ϕ2, ϕ3, ϕ4) of the supply voltage, with
- such phase angle (ϕ5, ϕ6, ϕ7) of the measured current is assigned to the measured phase angle (ϕ2, ϕ3, ϕ4) of the supply voltage at which the determined phase difference (Δϕ) or the magnitude of the determined phase difference (Δϕ) is minimal.

2. Method according to claim 1,
**characterized in that**
- starting from the measured phase angle (ϕ2, ϕ3, ϕ4) of the supply voltage, a calculated phase angle of the voltage is assigned to the two other lines of the supply network (4), in particular **in that** a phase shift of the calculated phase angles of 120° in each case with respect to the measured phase angle of the supply voltage is determined.

3. Method according to one of the preceding claims,
**characterized in that**
- a respective phase difference (Δϕ) between the calculated phase angles (ϕ2, ϕ3, ϕ4) of the voltage and at least one of the measured phase angles (ϕ5, ϕ6, ϕ7) of the current is determined.

4. Method according to any of the preceding claims,
**characterized in that**
- a minimum phase difference (Δϕ) between the calculated phase angles (ϕ2, ϕ3, ϕ4) of the voltage and the measured phase angles (ϕ5, ϕ6, ϕ7) of the current, which are not associated with the phase angle (ϕ2, ϕ3, ϕ4) of the supply voltage, is determined.

5. Method according to one of the preceding claims,
**characterized in that**
- the phase angle (ϕ5, ϕ6, ϕ7) of the current with the determined minimum phase difference (Δϕ) is assigned to the line having the corresponding calculated phase angle (ϕ2, ϕ3, ϕ4) of the voltage.

6. Method according to any of the preceding claims,
**characterized in that**
- exactly one measured phase angle (ϕ5, ϕ6, ϕ7) of the current and one phase angle (ϕ2, ϕ3, ϕ4) of the voltage are assigned to each respective line, wherein one line is assigned the measured phase angle (ϕ2, ϕ3, ϕ4) of the voltage and one of the measured phase angles (ϕ5, ϕ6, ϕ7) of the current, and the remaining lines are each assigned one of the calculated phase angles (ϕ2, ϕ3, ϕ4) of the voltage and one of the measured phase angles (ϕ5, ϕ6, ϕ7) of the current.

7. Method according to one of the preceding claims,
**characterized in that**
- the active power on a respective line is determined taking into account the phase difference (Δϕ) determined in each case.

8. Method according to one of the preceding claims,
**characterized in that**
- the phase angles (ϕ5, ϕ6, ϕ7) of the currents are detected without contact, in particular by means of a current clamp (14a-c).

9. Measuring device (2) arranged to measure phase angles occurring in the lines of a three-phase alternating current network and to associate a supply voltage phase angle measured in a line of the three-phase alternating current network to one of a plurality of current phase angles measured in corresponding lines of the three-phase alternating current network, the measuring device being arranged to carry out the measurement of the phase angles on lines of the supply connection via which a consumer is connected to the three-phase alternating current network, with:
- a connection to a line of the supply connection, via which the measuring device is connected to one of the lines of the alternating current network for the electrical supply of the measuring device,
- a measuring device set up to measure the phase angle of the voltage on the line used for the electrical supply of the measuring device,
- a measuring device with at least three measuring connections arranged for measuring the respective phase angles of the current in the lines of the alternating current network and for evaluating the respective phase angles of the current with the phase angle of the supply voltage
**characterized in that**
- the measuring device is arranged to determine a phase difference (Δϕ) between a respective measured phase angle (ϕ5, ϕ6, ϕ7) of the current and the measured phase angle (ϕ2, ϕ3, ϕ4) of the supply voltage,
- the measuring device is arranged to assign exactly one of the measured phase angles (ϕ5, ϕ6, ϕ7) of the current to the measured phase angle (ϕ2, ϕ3, ϕ4) of the supply voltage depending on the respectively determined phase difference (Δϕ), wherein
- phase angle (ϕ5, ϕ6, ϕ7) of the measured current is assigned to the measured phase angle (ϕ2, ϕ3, ϕ4) of the supply voltage at which the determined phase difference (Δϕ) or the magnitude of the determined phase difference (Δϕ) is minimal.

## Revendications

1. Procédé pour associer un angle de phase de tension d'alimentation, qui a été mesuré dans une ligne d'un réseau de courant alternatif triphasé, à l'un de plusieurs angles de phase de courant, qui ont été mesurés dans des lignes correspondantes du réseau de courant alternatif triphasé, la mesure des angles de phase s'effectuant au moyen d'un dispositif de mesure correspondant sur des lignes du raccordement d'alimentation, par l'intermédiaire desquelles un consommateur est raccordé au réseau de courant alternatif triphasé,
- où le dispositif de mesure (2) est raccordé à une ligne du réseau de courant alternatif (4) par l'intermédiaire d'une ligne du raccordement d'alimentation et est alimenté électriquement par celle-ci,
- où un angle de phase (ϕ2, ϕ3, ϕ4) de la tension d'alimentation est mesuré à l'aide du dispositif de mesure (2) sur la ligne (6) d'alimentation électrique du dispositif de mesure,
- un angle de phase (ϕ5, ϕ6, ϕ7) du courant dans les lignes du réseau de courant alternatif (4) est respectivement mesuré aux bornes de mesure respectives du dispositif de mesure (2), et
- où les angles de phase respectifs mesurés (ϕ5, ϕ6, ϕ7) du courant sont évalués avec l'angle de phase mesuré (ϕ2, ϕ3, ϕ4) de la tension d'alimentation,
**caractérisé**
- **en ce qu'**une différence de phase (Δϕ) entre un angle de phase (ϕ5, ϕ6, ϕ7) respectivement mesuré du courant et l'angle de phase (ϕ2, ϕ3, ϕ4) mesuré de la tension d'alimentation est déterminée,
- **en ce qu'**en fonction de la différence de phase (Δϕ) respectivement déterminée, exactement l'un des angles de phase (ϕ5, ϕ6, ϕ7) mesurés du courant est associé à l'angle de phase (ϕ2, ϕ3, ϕ4) mesuré de la tension d'alimentation,
- où l'angle de phase (ϕ5, ϕ6, ϕ7) du courant mesuré qui est associé à l'angle de phase mesuré (ϕ2, ϕ3, ϕ4) de la tension d'alimentation est celui pour lequel la différence de phase déterminée (Δϕ) ou la valeur de la différence de phase déterminée (Δϕ) est minimale.

2. Procédé selon la revendication 1,
**caractérisé**
- **en ce qu'**à partir de l'angle de phase mesuré (ϕ2, ϕ3, ϕ4) de la tension d'alimentation, un angle de phase calculé de la tension est attribué aux deux autres lignes du réseau d'alimentation (4), en particulier qu'un déphasage des angles de phase calculés de respectivement 120° par rapport à l'angle de phase mesuré de la tension d'alimentation est déterminé.

3. Procédé selon l'une des revendications précédentes,
**caractérisé**
- **en ce que**, respectivement, une différence de phase (Δϕ) entre les angles de phase calculés (ϕ2, ϕ3, ϕ4) de la tension et au moins l'un des angles de phase mesurés (ϕ5, ϕ6, ϕ7) du courant est déterminée.

4. Procédé selon l'une des revendications précédentes,
**caractérisé**
- **en ce qu'**une différence de phase minimale (Δϕ) est déterminée entre les angles de phase calculés (ϕ2, ϕ3, ϕ4) de la tension et les angles de phase mesurés (ϕ5, ϕ6, ϕ7) du courant qui ne sont pas associés à l'angle de phase (ϕ2, ϕ3, ϕ4) de la tension d'alimentation.

5. Procédé selon l'une des revendications précédentes,
**caractérisé**
- **en ce que** l'angle de phase (ϕ5, ϕ6, ϕ7) du courant ayant la différence de phase minimale déterminée (Δϕ) est attribué à la ligne qui présente l'angle de phase calculé (ϕ2, ϕ3, ϕ4) de la tension correspondant.

6. Procédé selon l'une des revendications précédentes,
**caractérisé**
- **en ce qu'**à chaque ligne sont associés exactement un angle de phase mesuré (ϕ5, ϕ6, ϕ7) du courant et un angle de phase (ϕ2, ϕ3, ϕ4) de la tension, où l'angle de phase mesuré (ϕ2, ϕ3, ϕ4) de la tension et un des angles de phase mesurés (ϕ5, ϕ6, ϕ7) du courant sont attribués à une ligne et l'un des angles de phase calculés (ϕ2, ϕ3, ϕ4) de la tension et l'un des angles de phase mesurés (ϕ5, ϕ6, ϕ7) du courant sont attribués respectivement aux lignes restantes.

7. Procédé selon l'une des revendications précédentes,
**caractérisé**
- **en ce que** la puissance active sur une ligne respective est déterminée en tenant compte de la différence de phase (Δϕ) déterminée à chaque fois.

8. Procédé selon l'une des revendications précédentes,
**caractérisé**
- **en ce que** les angles de phase (ϕ5, ϕ6, ϕ7) des courants sont détectés sans contact, notamment au moyen d'une pince ampèremétrique (14a-c).

9. Dispositif de mesure (2) adapté pour mesurer des angles de phase apparaissant dans les lignes d'un réseau de courant alternatif triphasé, et pour associer un angle de phase de tension d'alimentation mesuré dans une ligne du réseau de courant alternatif triphasé à l'un de plusieurs angles de phase de courant mesurés dans des lignes correspondantes du réseau de courant alternatif triphasé, le dispositif de mesure étant adapté pour effectuer la mesure des angles de phase sur des lignes du raccordement d'alimentation, par l'intermédiaire desquelles un consommateur est connecté au réseau de courant alternatif triphasé, comprenant :
- un raccordement à une ligne du raccordement d'alimentation, par lequel le dispositif de mesure est raccordé à l'une des lignes du réseau de courant alternatif pour l'alimentation électrique du dispositif de mesure,
- un dispositif de mesure agencé pour mesurer l'angle de phase de la tension sur la ligne qui sert à l'alimentation électrique du dispositif de mesure,
- un dispositif de mesure avec au moins trois raccords de mesure agencé s pour mesurer les angles de phase respectifs du courant dans les lignes du réseau de courant alternatif et pour évaluer les angles de phase respectifs du courant avec l'angle de phase de la tension d'alimentation,
**caractérisé**
- **en ce que** le dispositif de mesure est agencé pour déterminer une différence de phase (Δϕ) entre un angle de phase respectif mesuré (ϕ5, ϕ6, ϕ7) du courant et l'angle de phase mesuré (ϕ2, ϕ3, ϕ4) de la tension d'alimentation,
- **en ce que** le dispositif de mesure est agencé pour associer, en fonction de la différence de phase (Δϕ) respectivement déterminée, exactement l'un des angles de phase (ϕ5, ϕ6, ϕ7) mesurés du courant à l'angle de phase (ϕ2, ϕ3, ϕ4) mesuré de la tension d'alimentation,
- où l'angle de phase (ϕ5, ϕ6, ϕ7) du courant mesuré qui est associé à l'angle de phase mesuré (ϕ2, ϕ3, ϕ4) de la tension d'alimentation est celui pour lequel la différence de phase déterminée (Δϕ) ou la valeur de la différence de phase déterminée (Δϕ) est minimale.
